# EUROPÄISCHE PATENTANMELDUNG

(11) **EP 2 792 924 A1**
(43) Veröffentlichungstag der Anmeldung: **22.10.2014**
(21) Anmeldenummer: 13161724.3
(22) Anmeldetag: 28.03.2013
(51) Int. Cl.: F16L 25/00

(54) **Verbindungsanordnung für ein Temperierungskreislaufsystem**

(71) Anmelder: Bayer MaterialScience AG, 51373 Leverkusen (DE)
(72) Erfinder: Schumacher, Peter, 50226 Frechen (DE)
(74) Vertreter: BIP Patents

(57) **Zusammenfassung**

Die Erfindung betrifft eine Verbindungsanordnung (4) für ein Temperierungskreislaufsystem (2) mit einer ersten mit einer weiteren Begleittemperierungsleitung (12, 12.2) zu verbindenden Begleittemperierungsleitung (12, 12.1), wobei die Verbindungsanordnung (4) umfasst mindestens einen zumindest teilweise flexibel gebildeten Metallverbindungsschlauch (6), und mindestens eine Adaptereinrichtung (8, 8.1, 8.2), wobei die Adaptereinrichtung (8, 8.1, 8.2) zum fluiddichten Verbinden der Adaptereinrichtung (8, 8.1, 8.2) mit der Begleittemperierungsleitung (12, 12.1, 12.2) eingerichtet ist, und wobei die Adaptereinrichtung (8, 8.1, 8.2) zum fluiddichten Verbinden der Adaptereinrichtung (8, 8.1, 8.2) mit dem Metallverbindungsschlauch (6) eingerichtet ist.

## Beschreibung

Die Erfindung betrifft eine Verbindungsanordnung für ein Temperierungskreislaufsystem mit einer ersten mit einer weiteren Begleittemperierungsleitung zu verbindenden Begleittemperierungsleitung. Darüber hinaus betrifft die Erfindung ein Temperierungskreislaufsystem und ein Verfahren zum Verbinden einer Verbindungsanordnung mit einer Begleittemperierungsleitung.

Zur Förderung und Verarbeitung von bestimmten Materialien ist es erforderlich, die Vorrichtungen und/oder Fluidleitungen zu temperieren. Beispielsweise werden bei der Herstellung von Polyethern hochviskose Materialien eingesetzt. Um dieses hochviskose Material verarbeiten und insbesondere fördern zu können, müssen die Materialien während der Verarbeitung und Förderung eine bestimmte Temperatur aufweisen. Bei der Herstellung von Polyethern ist insbesondere eine Beheizung der Fluidleitungen und/oder der Vorrichtungen erforderlich.

Aus dem Stand der Technik sind Temperierungskreislaufsysteme bekannt, bei denen am zu temperierenden Objekt eine Begleittemperierungsanordnung entlang geführt ist. Insbesondere kann mindestens eine Begleittemperierungsleitung an einer Fluidleitungen zur Temperierung entlang geführt werden. Durch die Begleittemperierungsleitung kann ein Fluid, wie Wasser, mit einer bestimmten Temperatur durchgeleitet werden, um das in der Fluidleitung befindliche Material zu beheizen oder zu kühlen. Hierbei wird eine Begleittemperierungsleitung für eine möglichst optimale Temperierung in der Regel mit einem geringen Abstand, vorzugsweise unmittelbar anliegend, an der Fluidleitung entlang geführt.

In bestimmten Bereichen des Temperierungskreislaufsystem, wie an Engstellen, Kurvenbereichen, Flansch-Verbindungsstellen zweier Fluidleitungen, etc. ist es jedoch nicht möglich, die Begleittemperierungsleitung direkt an der Fluidleitung entlang zu führen. Häufig ist es dann erforderlich, diesen Bereich durch eine Verbindungsanordnung zu überbrücken. So wird in der Regel eine Verbindungsanordnung eingesetzt, um ein Leitungsende einer ersten Begleittemperierungsleitung mit dem Leitungsende einer weiteren Begleittemperierungsleitung zu verbinden und ein Hindernis zu überbrücken.

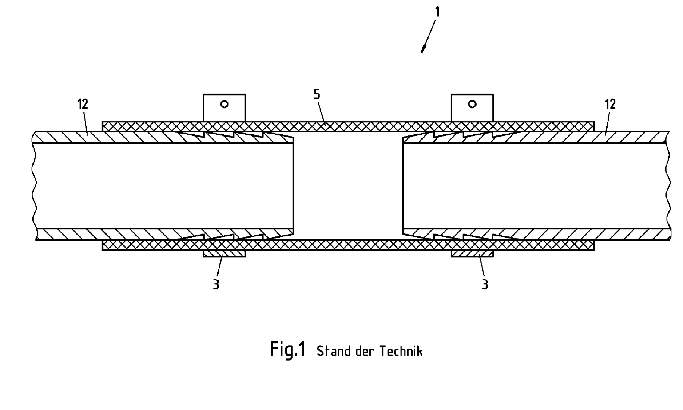

Figur 1 zeigt ein Ausführungsbeispiel einer Verbindungsanordnung 1 aus dem Stand der Technik, welche eine erste Begleittemperierungsleitung 12 mit einer weiteren Begleittemperierungsleitung 12 verbindet. Die Verbindungsanordnung 1 weist einen Gummischlauch 5, wie einen Elaflexschlauch 5, auf. Der flexibel gebildete Gummischlauch 5 ermöglicht es, erforderliche Krümmungen herzustellen, um bestimmte Hindernisse z.B. in Kurvenbereichen, Verbindungsbereichen, etc. zu überbrücken. Nach dem Positionieren der Schlauchschellen 3 und Überstreifen des Gummischlauchs 5 über das jeweilige Leitungsende bzw. die jeweilige Schlauchtülle einer Begleittemperierungsleitung 12 können die Schlauchschellen 3 angezogen werden.

Nachteilig bei dieser Verbindungsanordnung ist neben dem aufwendigen Anbringen der Verbindungsanordnung mit Hilfe der Schlauchschellen, insbesondere, dass Gummischläuche für einen Langzeitbetrieb ungeeignet sind. So werden Gummischläuche im Laufe der Zeit spröde. Dies birgt das Risiko, dass sie undicht werden und beispielsweise platzen. In diesem Fall muss der Produktionsprozess unterbrochen und die defekte Verbindungsanordnung ausgetauscht werden. Eine Unterbrechung des Produktionsprozesses wiederum ist stets mit hohen Kosten verbunden.

Daher liegt der Erfindung die Aufgabe zugrunde, eine Verbindungsanordnung für ein Temperierungskreislaufsystem zur Verfügung zu stellen, welche eine einfache Handhabung erlaubt und eine erhöhte Lebensdauer aufweist.

Die zuvor hergeleitete und aufgezeigte Aufgabe wird gemäß einem ersten Aspekt der Erfindung bei einer Verbindungsanordnung für ein Temperierungskreislaufsystem mit einer ersten mit einer weiteren Begleittemperierungsleitung zu verbindenden Begleittemperierungsleitung gemäß dem Patentanspruch 1 gelöst. Die Verbindungsanordnung umfasst mindestens einen zumindest teilweise flexibel gebildeten Metallverbindungsschlauch. Die Verbindungsanordnung umfasst ferner mindestens eine Adaptereinrichtung, wobei die Adaptereinrichtung zum fluiddichten Verbinden der Adaptereinrichtung mit der Begleittemperierungsleitung eingerichtet ist und wobei die Adaptereinrichtung zum fluiddichten Verbinden der Adaptereinrichtung mit dem Metallverbindungsschlauch eingerichtet ist.

Im Gegensatz zum Stand der Technik wird die Lebensdauer der Verbindungsanordnung signifikant verbessert, indem anstelle eines Gummischlauchs ein Metallverbindungsschlauch eingesetzt wird. Durch die Anordnung einer Adaptereinrichtung zwischen der Begleittemperierungsleitung und dem Metallverbindungsschlauch kann in einfacher Weise eine fluiddichte Verbindung zwischen der Begleittemperierungsleitung und dem Metallverbindungsschlauch bereitgestellt werden.

Die vorliegende Verbindungsanordnung ist speziell für ein Temperierungskreislaufsystem ausgebildet. Ein Temperierungskreislaufsystem zeichnet sich dadurch, dass ein zu temperierendes Fluid durch eine Fluidleitung geführt wird. Benachbart zu der Fluidleitung ist mindestens eine Begleittemperierungsleitung angeordnet, um die Fluidleitung bzw. das darin befindliche Fluid zu temperieren, wie zu kühlen oder zu beheizen. Hierzu kann ein Fluid mit einer gewünschten Temperatur durch die Begleittemperierungsleitung geleitet werden. An bestimmten Stellen, wie Verbindungsstellen der Fluidleitung, an denen zwei Fluidleitungen miteinander verbunden sind, oder in Kurvenbereichen, kann es erforderlich sein, das Ende einer ersten Begleittemperierungsleitung mit dem Ende einer weiteren Begleittemperierungsleitung zu verbinden, um zum Beispiel ein der Begleittemperierungsleitung im Weg stehendes Hindernis, beispielsweise eine Flanschverbindung, zu überbrücken.

Es ist erfindungsgemäß erkannt worden, dass zur Verbesserung der Lebensdauer der Verbindungsanordnung der Verbindungsschlauch aus Metall gebildet sein sollte. Im Gegensatz zu einem Gummimaterial wird ein metallischer Schlauch nicht porös und daher nicht undicht. Um ferner bestimmte Krümmungsradien zur Überbrückung eines Hindernisses mit dem Metallverbindungsschlauch in einfacher Weise herzustellen, ist dieser zumindest teilweise flexibel ausgebildet. Unter flexibel ausgebildet ist zu verstehen, dass der Metallverbindungsschlauch in einfacher Weise in eine gebogene Position gebracht werden kann. Beispielsweise kann der Metallverbindungsschlauch zwei starre Endabschnitte und einen zwischen den Endabschnitten flexibel gebildeten Mittelabschnitt aufweisen. Insbesondere kann der Metallverbindungsschlauch dazu eingerichtet sein, eine Krümmung von bis zu 90°, vorzugsweise von bis zu 135°, herzustellen.

Für eine besonders einfache Anbindung des Metallverbindungsschlauchs an zumindest eine Begleittemperierungsleitung ist erfindungsgemäß eine Adaptereinrichtung vorgesehen. Insbesondere kann eine Schraubadaptereinrichtung vorgesehen sein, bei welcher (lediglich) durch eine Schraubaktion eine fluiddichte Verbindung zwischen dem Metallverbindungsschlauch und/oder der Begleittemperierungsleitung und der Adaptereinrichtung herstellbar ist. Eine Adaptereinrichtung ist hierbei ein Zwischenstück, welches zwischen einem Ende der Begleittemperierungsleitung und einem Ende des Metallverbindungsschlauchs angeordnet werden kann, damit ein Fluid von der Begleittemperierungsleitung durch die Adaptereinrichtung in den Metallverbindungsschlauch fließen kann.

Erfindungsgemäß wird eine Verbindungsanordnung für ein Temperierungskreislaufsystem bereitgestellt, welches eine hohe Lebenserwartung aufweist und gleichzeitig einfach zu handhaben ist.

Gemäß einer ersten Ausführungsform der erfindungsgemäßen Verbindungsanordnung kann mindestens eine weitere Adaptereinrichtung eingerichtet zum fluiddichten Verbinden der weiteren Adaptereinrichtung mit der weiteren Begleittemperierungsleitung und zum fluiddichten Verbinden der weiteren Adaptereinrichtung mit dem Metallverbindungsschlauchs vorgesehen sein. Insbesondere können die Adaptereinrichtung und die weitere Adaptereinrichtung im Wesentlichen identisch gebildet sein. Hierdurch kann eine leicht zu handhabende Verbindungsanordnung bereitgestellt werden. In einfacher Weise können, beispielsweise in einem Kurven- und/oder Verbindungsbereich des Temperierungskreislaufsystems, zwei Begleittemperierungsleitungen miteinander verbunden und ein Hindernis überbrückt werden.

Grundsätzlich kann der Metallverbindungsschlauch auf beliebige Weise gebildet sein, solange der Metallverbindungsschlauch zumindest teilweise flexibel gebildet ist. Vorzugsweise kann der Metallverbindungsschlauch ein Metallwellschlauch sein. Ein Metallwellschlauch ist einfach und insbesondere mit einer ausreichenden Flexibilität zu fertigen. Beispielsweise kann ein Metallwellschlauch mit starr gebildeten Endabschnitten und einem flexiblen Mittelabschnitt bereitgestellt werden. Um die Lebensdauer noch weiter zu verbessern, kann insbesondere ein Edelstahlwellschlauch bereitgestellt werden. Es versteht sich, dass auch andere metallische Materialien verwendet werden können.

Um eine sichere und insbesondere dauerhafte Verbindung zwischen der Adaptereinrichtung und der Begleittemperierungsleitung und/oder dem Metallverbindungsschlauch zu erzielen, kann gemäß einer weiteren Ausführungsform der vorliegenden Verbindungsanordnung die Adaptereinrichtung zum kraftschlüssigen Verbinden der Adaptereinrichtung mit der Begleittemperierungsleitung eingerichtet sein. Alternativ oder zusätzlich kann die Adaptereinrichtung zum kraftschlüssigen Verbinden der Adaptereinrichtung mit dem Metallverbindungsschlauch eingerichtet sein. Ein Kraftschluss verhindert, dass sich die Verbindung während des Betriebs beispielsweise aufgrund von Vibrationen ungewollt lösen kann. Zwar kann der Kraftschluss grundsätzlich auch durch einen Stoffschluss erzielt werden. Vorzugsweise kann die kraftschlüssige Verbindung ohne eine stoffschlüssige Verbindung hergestellt werden. Insbesondere kann die Adaptereinrichtung für eine lösbare kraftschlüssige Verbindung zwischen der Adaptereinrichtung und dem Metallverbindungsschlauch und/oder zwischen der Adaptereinrichtung und der Begleittemperierungsleitung eingerichtet sein. Eine entsprechende Verbindung kann aufwandsarm hergestellt werden.

Gemäß einer weiteren Ausführungsform kann die Adaptereinrichtung mehrteilig gebildet sein. Gemäß einer bevorzugten Ausführungsform der erfindungsgemäßen Verbindungsanordnung kann die Adaptereinrichtung ein erstes Adapterteil und ein zweites Adapterteil umfassen. Das erste Adapterteil kann einen ersten Endabschnitt, einen weiteren Endabschnitt und einen Mittelabschnitt aufweisen. Der Mittelabschnitt kann insbesondere unmittelbar an die beiden Endabschnitte angrenzen. Das erste Adapterteil kann insbesondere eine zylinderförmige Form mit einer äußeren Umfangsfläche und einer inneren Umfangsfläche aufweisen. Das zweite Adapterteil kann einen ersten Endabschnitt, einen weiteren Endabschnitt und einen Mittelabschnitt aufweisen. Der Mittelabschnitt kann insbesondere unmittelbar an die beiden Endabschnitte angrenzen. Ferner kann der erste Endabschnitt des ersten Adapterteils mit dem ersten Endabschnitt des zweiten Adapterteils verbindbar sein. Insbesondere kann das erste Adapterteil mit dem zweiten Adapterteil lösbar verbunden werden. Eine mehrteilige Ausgestaltung der Adaptereinrichtung hat den Vorteil, dass ein Adapterteil für die Begleittemperierungsleitung und ein weiteres Adapterteil für den Metallverbindungsschlauch konfiguriert sein kann, um den unterschiedlichen Formen der Begleittemperierungsleitung und des Metallverbindungsschlauchs Rechnung zu tragen. Gleichzeitig kann durch eine mehrteilige Ausbildung die Herstellung der fluiddichten Verbindung vereinfacht werden. Beispielsweise kann erst das erste Adapterteil in die Begleittemperierungsleitung und/oder den Metallverbindungsschlauch eingesetzt werden und anschließend das andere Adapterteil mit dem ersten Adapterteil verbunden werden.

Vorzugsweise korrespondiert das erste Adapterteil der Adaptereinrichtung zu der Begleittemperierungsleitung, insbesondere zu dem Ende der Begleittemperierungsleitung. Beispielsweise kann der Außendurchmesser des ersten Adapterteils im Wesentlichen dem Innendurchmesser der Begleittemperierungsleitung entsprechen. Es versteht sich, dass alternativ auch der Innendurchmesser des ersten Adapterteils im Wesentlichen dem Außendurchmesser der Begleittemperierungsleitung entsprechen kann. In einfacher Weise können die Adaptereinrichtung und die Begleittemperierungsleitung ineinander gesteckt werden. Es versteht sich, dass gemäß einer anderen Variante das erste Adapterteil in zuvor beschriebener Weise auch zu dem Metallverbindungsschlauch korrespondieren kann.

Des Weiteren korrespondiert das zweite Adapterteil der Adaptereinrichtung vorzugsweise zu dem Metallverbindungsschlauch, insbesondere zu dem Ende des Metallverbindungsschlauchs. Beispielsweise kann der Außendurchmesser des zweiten Adapterteils im Wesentlichen dem Innendurchmesser des Metallverbindungsschlauchs entsprechen. Es versteht sich, dass alternativ auch der Innendurchmesser des zweiten Adapterteils im Wesentlichen dem Außendurchmesser des Metallverbindungsschlauchs entsprechen kann. In einfacher Weise können die Adaptereinrichtung und der Metallverbindungsschlauch ineinander gesteckt werden. Es versteht sich, dass gemäß einer anderen Variante das zweite Adapterteil in zuvor beschriebener Weise auch zu der Begleittemperierungsleitung korrespondieren kann.

In einer weiteren bevorzugten Ausführungsform kann das erste Adapterteil ein elastisches Element umfassen. Das erste Adapterteil und das zweite Adapterteil können derart eingerichtet sein, dass in einer Verbindungsendposition des ersten Adapterteils und des zweiten Adapterteils das elastische Element gestaucht ist. Wie bereits beschrieben wurde, können das erste und das zweite Adapterteil miteinander verbunden werden. Unter einer Verbindungsendposition ist hierbei die endgültige Position der beiden Adapterteile zueinander zu verstehen. Also die Position, die während des Betriebs des Temperierungskreislaufsystems beibehalten wird. Während in einer Verbindungsanfangsposition das elastische Element nicht oder nur unwesentlich gestaucht sein kann, ist das elastische Element in der Verbindungsendposition gestaucht. Das elastische Element kann insbesondere ein ringförmiges Element sein, welches in einem ungestauchten Zustand eine bestimmte Breite und eine bestimmte Höhe aufweist. Beispielsweise kann das elastische Element auf der äußeren Umfangsfläche oder der inneren Umfangsfläche des ersten Adapterteils wie beispielsweise dem Mittelabschnitt des ersten Adapterteils, angeordnet sein. Unter einer Stauchung des elastischen Elements ist insbesondere eine Reduzierung der Breite des elastischen Elements zu verstehen, welche eine Ausdehnung der Höhe des elastischen Elements bewirkt. Mit anderen Worten kann durch eine Stauchung der Außendurchmesser (oder der Innendurchmesser) des ersten Adapterteils vergrößert (oder verringert) werden. Diese Stauchung kann einen Kraftschluss bewirken, wenn das elastische Element zwischen einer Umfangsfläche der Begleittemperierungsleitung und einer Umfangsfläche des ersten Adapterteils angeordnet ist. In einfacher Weise kann eine sichere (kraftschlüssige) Verbindung zwischen der Adaptereinrichtung und der Begleittemperierungsleitung hergestellt werden.

Vorzugsweise kann gemäß einer weiteren Ausführungsform der weitere Endabschnitt des ersten Adapterteils eine Auskragung aufweisen. Der an die Auskragung anschließende Mittelabschnitt des ersten Adapterteils kann das elastische Element umfassen. Der erste mit dem ersten Endabschnitt des ersten Adapterteils verbindbare Endabschnitt des zweiten Adapterteils kann eine Anschlagsfläche aufweisen. In der Verbindungsendposition des ersten Adapterteils und des zweiten Adapterteils kann das elastische Element zwischen der Auskragung und der Anschlagsfläche gestaucht sein. Mit anderen Worten kann der Abstand insbesondere durch Herstellen der Verbindungsendposition zwischen der Anschlagsfläche und der Auskragung derart verringerbar sein, dass das elastische Element gestaucht werden kann. Wenn das elastische Element zwischen der Auskragung und der Anschlagsfläche angeordnet ist, kann das elastische Element durch die axiale Bewegung gestaucht werden, so dass die Höhe des elastischen Elements in Abhängigkeit einer axialen Bewegung des ersten Adapterteils zum zweiten Adapterteil vergrößert wird. Es versteht sich, dass durch eine axiale Gegenbewegung das elastische Element aufgrund seiner Elastizität wieder gestreckt wird. Ein Kraftschluss kann leicht hergestellt und wieder gelöst werden.

Grundsätzlich können das erste Adapterteil und das zweite Adapterteil in beliebiger Weise miteinander verbunden werden. Gemäß einer bevorzugten Ausführungsform der erfindungsgemäßen Verbindungsanordnung kann der erste Endabschnitt des ersten Adapterteils ein zu einem Gewinde des ersten Endabschnitts des zweiten Adapterteils korrespondierendes Gewinde aufweisen. Beispielsweise kann das erste Adapterteil ein Außengewinde (oder ein Innengewinde) und das weitere Adapterteil ein zu dem Außengewinde (Innengewinde) korrespondierendes Innengewinde (Außengewinde) aufweisen. Neben einer einfach herzustellenden Verbindung besitzt eine derartige Schraubverbindung den Vorteil, dass durch die Herstellung einer Endverbindungsposition die Adapterteile eine relative axiale Bewegung zu einander ausführen. Durch die axiale Bewegung kann insbesondere mittels der Anschlagsfläche und der Auskragung eine Stauchung des elastischen Elements bewirkt werden. Mittels einer Schraubbewegung kann eine kraftschlüssige Verbindung besonders einfach hergestellt und gelöst werden.

In einer weiteren Ausführungsform kann das elastische Element eine Dichtungseinrichtung, insbesondere ein Dichtungsring aus Viton, sein. Beispielsweise kann ein Dichtungsring, wie eine O-Ring-Dichtung, vorgesehen sein. Das Material Viton, ein Fluorelastomer, besitzt hierbei den Vorteil einer besonders hohen thermischen und chemischen Beständigkeit. Eine separate Dichtungseinrichtung ist nicht erforderlich. Es versteht sich, dass auch andere Dichtungsmaterialien, wie andere Elastomere, eingesetzt werden können.

Darüber hinaus kann gemäß einer weiteren Ausführungsform vorgesehen sein, dass der weitere Endabschnitt des zweiten Adapterteils mindestens ein zumindest in radialer Richtung beweglich gelagertes Presselement aufweist. Das Presselement kann an dem zweiten Adapterteil, insbesondere dem weiteren Endabschnitt, gelagert sein. Das Presselement kann in Abhängigkeit einer auf das Presselement ausgeübten Kraft in radialer Richtung bewegt werden. Diese radiale Bewegung kann insbesondere zur Herstellung einer kraftschlüssigen Verbindung der Adaptereinrichtung mit einer weiteren Leitung, wie dem Metallverbindungsschlauch, genutzt werden. So kann durch das mindestens eine Presselement das zweite Adapterteil derart gegen den Metallverbindungsschlauch gepresst werden, dass eine kraftschlüssige Verbindung zwischen den beiden Elementen hergestellt wird. Es versteht sich, dass gemäß anderen Varianten der Erfindung mittels des Presselements auch eine kraftschlüssige Verbindung zwischen der Begleittemperierungsleitung und der Adaptereinrichtung hergestellt werden kann. Bevorzugt können zwei Presselemente vorgesehen, welche zusammenwirken. Hierdurch lässt sich eine noch sicherere kraftschlüssige Verbindung erzielen. Es versteht sich, dass auch drei oder mehr Presselemente vorgesehen sein können. Darüber hinaus kann mindestens ein Presselement aus einem Dichtungsmaterial hergestellt sein. Alternativ oder zusätzlich kann eine separate Dichtungseinrichtung, wie ein Dichtungsring, vorgesehen sein.

Vorzugsweise kann der weitere Endabschnitt des zweiten Adapterteils an dem Mittelabschnitt des zweiten Adapterteils in axialer Richtung beweglich gelagert sein. Der Endabschnitt kann zumindest in axialer Richtung relativ zum Mittelabschnitt des zweiten Adapterteils verschoben werden. Der zweite Endabschnitt des zweiten Adapterteils kann mit dem Presselement derart in Wirkverbindung stehen, dass eine Bewegung des zweiten Endabschnitts in axialer Richtung eine radiale Bewegung des Presselements bewirkt. Insbesondere kann durch eine axiale Bewegung des weiteren Endabschnitts in eine erste axiale Richtung eine radiale Bewegung des mindestens einen Presselements in eine erste Richtung bewirkt werden. Eine axiale Bewegung in die Gegenrichtung kann in entsprechender Weise eine radiale Bewegung des Presselements in die Gegenrichtung bewirken. Ein Presselement kann eine im Wesentlichen keilförmige Querschnittsfläche aufweisen. Die keilförmige Form ermöglicht in einfacher Weise, eine axiale Bewegung in eine radiale Bewegung umzuleiten. Durch die radiale Bewegung kann ein weiteres Element, wie ein Metallverbindungsschlauch, kraftschlüssig mit der Adaptereinrichtung verbunden werden.

Grundsätzlich kann die relative axiale Bewegung durch verschiedene Mittel bewirkt werden. Gemäß einer bevorzugten Ausführungsform kann der Mittelabschnitt des weiteren Adapterteils ein zu einem weiteren Gewinde des weiteren Endabschnitts des zweiten Adapterteils korrespondierendes Gewinde aufweisen. Beispielsweise kann der weitere Endabschnitt des zweiten Adapterteils ein Innengewinde (oder ein Außengewinde) und der Mittelabschnitt ein zu dem Innengewinde (Außengewinde) korrespondierendes Außengewinde (Innengewinde) aufweisen. Neben einer einfach herzustellenden Verbindung besitzt eine Schraubverbindung den Vorteil, dass durch die Herstellung einer Endverbindungsposition die Abschnitte eine relative axiale Bewegung zu einander ausführen. Diese axiale Bewegung kann wiederum eine radiale Bewegung des mindestens einen Presselements bewirken, so dass in einfacher Weise eine kraftschlüssige Verbindung zwischen der Adaptereinrichtung und einer weiteren Leitung hergestellt wird.

Ein weiterer Aspekt der Erfindung ist ein Temperierungskreislaufsystem gemäß dem Patentanspruch 13. Das Temperierungskreislaufsystem umfasst mindestens eine zu temperierende Fluidleitung, eine erste Begleittemperierungsleitung eingerichtet zur Temperierung der Fluidleitung, eine weitere Begleittemperierungsleitung eingerichtet zur Temperierung der Fluidleitung, und eine zuvor beschriebene Verbindungsanordnung zum Verbinden der ersten Begleittemperierungsleitung mit der weiteren Begleittemperierungsleitung.

Erfindungsgemäß wird ein Temperierungskreislaufsystem mit einer Verbindungsanordnung bereitgestellt, welches eine hohe Lebenserwartung aufweist und gleichzeitig einfach zu handhaben ist.

Ein noch weiterer Aspekt der Erfindung ist ein Verfahren zum Verbinden einer Begleittemperierungsleitung eines Temperierungskreislaufsystems mit einer Verbindungsanordnung, insbesondere einer zuvor beschriebenen Verbindungsanordnung, gemäß dem vorliegenden Patentanspruch 14. Das Verfahren umfasst die Schritte:
- Bereitstellen von mindestens einer Adaptereinrichtung,
- Bereitstellen von mindestens einem zumindest teilweise flexibel gebildeten Metallverbindungsschlauch,
- Herstellen einer fluiddichten Verbindung zwischen der Adaptereinrichtung und der Begleittemperierungsleitung, und
- Herstellen einer fluiddichten Verbindung zwischen der Adaptereinrichtung und dem Metallverbindungsschlauch.

In einfacher Weise kann eine fluiddichte Verbindung zwischen einem Metallverbindungsschlauch und einer Begleittemperierungsleitung hergestellt werden. Vorzugsweise kann in entsprechender Weise der Metallverbindungsschlauch mittels einer weiteren Adaptereinrichtung mit einer weiteren Begleittemperierungsleitung fluiddicht verbunden werden.

Gemäß einer ersten Ausführungsform des Verfahrens der vorliegenden Erfindung können ein erstes Adapterteil der Adaptereinrichtung und ein zweites Adapterteil der Adaptereinrichtung miteinander derart verschraubt werden, dass in einer Verbindungsendposition eine kraftschlüssige Verbindung zwischen der Adaptereinrichtung und der Begleittemperierungsleitung und/oder dem Metallverbindungsschlauch hergestellt wird. Durch eine Schraubbewegung kann in einfacher Weise eine kraftschlüssige Verbindung zwischen der Adaptereinrichtung und der Begleittemperierungsleitung und/oder zwischen der Adaptereinrichtung und dem Metallverbindungsschlauch hergestellt werden.

Alternativ oder zusätzlich können ein weiterer Endabschnitt des zweiten Adapterteils und ein Mittelabschnitt des zweiten Adapterteils derart miteinander verschraubt werden, dass in einer Verbindungsendposition eine kraftschlüssige Verbindung zwischen der Adaptereinrichtung und der Begleittemperierungsleitung und/oder dem Metallverbindungsschlauch hergestellt wird. Durch eine Schraubbewegung kann in einfacher Weise eine kraftschlüssige Verbindung zwischen der Adaptereinrichtung und der Begleittemperierungsleitung und/oder zwischen der Adaptereinrichtung und dem Metallverbindungsschlauch hergestellt werden.

Die Merkmale der Verfahren und Vorrichtungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, die erfindungsgemäße Verbindungsanordnung, das erfindungsgemäße Temperierungskreislaufsystem sowie das erfindungsgemäße Verfahren zum Verbinden einer Begleittemperierungsleitung eines Temperierungskreislaufsystems mit einer Verbindungsanordnung auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht einer Verbindungsanordnung gemäß dem Stand der Technik;
- Fig. 2: eine schematische Ansicht eines Ausführungsbeispiels eines Temperierungskreislaufsystems gemäß der Erfindung;
- Fig. 3a: eine schematische Ansicht eines Ausführungsbeispiels eines flexiblen Metallverbindungsschlauchs;
- Fig. 3b: eine schematische Ansicht eines Ausführungsbeispiels eines ersten Adapterteils einer Adaptereinrichtung;
- Fig. 3c: eine schematische Ansicht eines Ausführungsbeispiels eines zweiten Adapterteils einer Adaptereinrichtung;
- Fig. 3d: eine schematische Ansicht eines Ausführungsbeispiels eines elastischen Elements für die Adaptereinrichtung;
- Fig. 4: eine schematische Schnittansicht des in Figur 3c dargestellten Ausführungsbeispiels eines zweiten Adapterteils einer Adaptereinrichtung;
- Fig. 5a bis 5e: schematische Ansichten eines Ausführungsbeispiels einer Verbindungsanordnung in verschiedenen Zusammensetzungszuständen; und
- Fig. 6: eine schematische Schnittansicht eines Ausführungsbeispiels eines Temperierungskreislaufsystems gemäß der Erfindung.

Nachfolgend werden gleiche Bezugszeichen für gleiche Elemente verwendet.

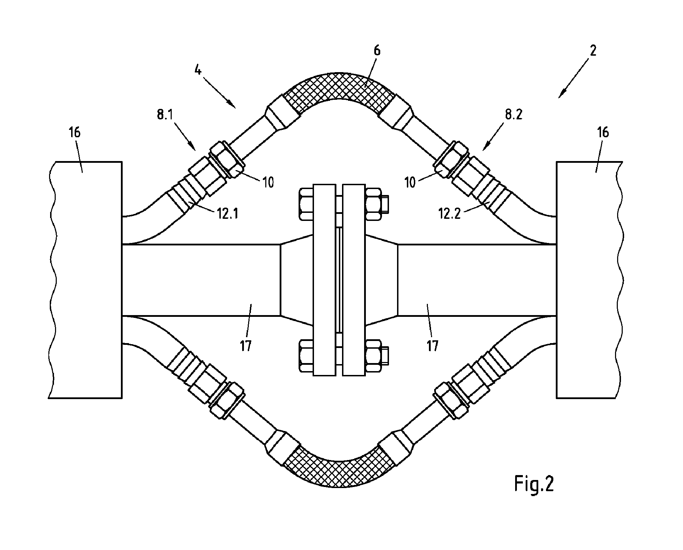

Figur 2 zeigt eine schematische Ansicht eines Ausführungsbeispiels eines Temperierungskreislaufsystems 2 gemäß der Erfindung. Insbesondere zeigt Figur 2 einen Ausschnitt eines beispielhaften Temperierungskreislaufsystems 2 an einer Verbindungsstelle zweier Fluidleitungen 17 in Form von Leitungsrohren 17. Beispielsweise kann durch die Leitungsrohre 17 ein Fluid geleitet werden, welches für die Förderung einen bestimmten Temperaturbereich benötigt. So kann bei der Förderung von hochviskosen Produkten zur Herstellung von Polyethern eine Beheizung erforderlich sein. In den nachfolgenden Beispielen wird davon ausgegangen, dass eine Beheizung erforderlich ist. Es versteht sich, dass gemäß anderen Varianten der Erfindung auch eine Kühlung vorgesehen sein kann.

Um das in den Leitungsrohren 17 geleitete Fluid zu beheizen, sind im vorliegenden Beispiel pro Fluidleitung 17 zwei Begleittemperierungsleitungen 12.1 und 12.2 vorgesehen. Um eine möglichst optimale Beheizung mit einem geringen Energieverbrauch bereitzustellen, kann eine Begleittemperierungsleitungen 12.1, 12.2 an der jeweiligen Fluidleitung dicht anliegen. Zudem kann eine Isolierung 16 vorgesehen sein, um die Wärmeabgabe an die Umgebung zumindest zu reduzieren.

In der dargestellten Verbindungsstelle ist es jedoch aufgrund des Hindernisses nicht möglich, die Begleittemperierungsleitungen 12.1, 12.2 nah an den Leitungsrohren 17 vorbeizuführen. Zur Überbrückung des Hindernisses ist es erforderlich, eine Verbindungsanordnung 4 zwischen der ersten Begleittemperierungsleitung 12.1 und einer weiteren Begleittemperierungsleitung 12.2 anzuordnen. Hierdurch kann die Verbindungsstelle überbrückt werden.

Die beispielhafte erfindungsgemäße Verbindungsanordnung 4 umfasst einen zumindest teilweise flexibel gebildeten Metallverbindungsschlauch 6 und zwei Adaptereinrichtungen 8. Eine Adaptereinrichtung 8 ist zum Anschließen des Metallverbindungsschlauchs 6 an die jeweilige Begleittemperierungsleitung 12.1, 12.2 konfiguriert.

Wie aus der Figur 2 zu entnehmen ist, weist vorliegend der zumindest teilweise flexibel gebildete Metallverbindungsschlauch 6 zwei starre Endbereich und einen flexiblen Mittelabschnitt auf. Beispielsweise kann es sich bei dem Metallverbindungsschlauch 6 um einen Metallwellschlauch 6, insbesondere einen Edelstahlwellschlauch 6, handeln.

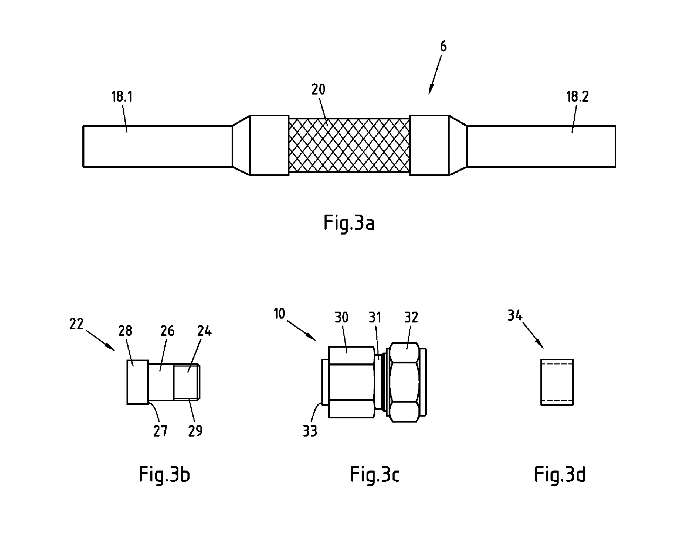

Die für eine Verbindungsanordnung 4 erforderlichen zwei Adaptereinrichtungen 8 können im Wesentlichen gleich gebildet sein. Es versteht sich jedoch, dass auch unterschiedliche Adaptereinrichtungen vorgesehen sein können. In dem vorliegenden Ausführungsbeispiel ist ein zweites Adapterteil 10 der Adaptereinrichtung 8 in Form einer Aufsetzverschraubung 10 dargestellt. Eine detailliertere Beschreibung eines Ausführungsbeispiels einer Adaptereinrichtung 8 erfolgt nachfolgend mit Hilfe der Figuren 3b bis 3d.

Die Figuren 3a bis 3d zeigen verschiedenen Komponenten eines Ausführungsbeispiels einer Verbindungsanordnung 4. Die Figur 3a zeigt eine schematische Ansicht eines Ausführungsbeispiels eines flexiblen Metallverbindungsschlauchs 6. Wie bereits beschrieben wurde, kann der zumindest teilweise flexibel gebildete Metallverbindungsschlauch 6 zwei starre Endbereiche 18.1, 18.2 und einen flexiblen Mittelabschnitt 20 aufweisen. Durch einen flexiblen Mittelabschnitt 20 kann der Metallverbindungsschlauch 6 in einfacher Weise gebogen werden. Verbindungsstellen mit Hindernissen lassen sich leicht überbrücken. Gleichzeitig erhöht die Bildung des Verbindungsschlauchs 6 aus Metall dessen Lebenserwartung signifikant. Das Risiko von Undichtigkeiten sinkt deutlich.

Figur 3b zeigt eine schematische Ansicht eines Ausführungsbeispiels eines ersten Adapterteils 22 einer Adaptereinrichtung 8. Das erste Adapterteil 22 ist insbesondere eine Einsetzverschraubung 22. Das erste Adapterteil 22 kann insbesondere zylinderförmig gebildet sein. Das erste Adapterteil 22 kann in drei Abschnitte 24, 26 und 28 unterteilt werden. Ein erster Endabschnitt 24 kann ein Außengewinde 29 aufweisen. An den ersten Endabschnitt 24 schließt sich vorliegend ein Mittelabschnitt 26 (unmittelbar) an. Der Außendurchmesser des Mittelabschnitts 26 entspricht im Wesentlichen dem Außendurchmesser des ersten Endabschnitts 24. An den Mittelabschnitt 26 schließt sich vorliegend ein weiterer Endabschnitt 28 (unmittelbar) an. Der weitere Endabschnitt 28 kann eine Auskragung 27 umfassen. Vorliegend ist der weitere Endabschnitt 28 als Auskragung 27 gebildet. Insbesondere ist der Außendurchmesser der Auskragung 27 zumindest größer als der Außendurchmesser des Mittelabschnitts 26. Es sei angemerkt, dass der Innendurchmesser sämtlicher Abschnitte 24, 26, 28 im Wesentlichen gleich sein kann.

Figur 3c zeigt eine schematische Ansicht eines Ausführungsbeispiels eines zweiten Adapterteils 10 der Adaptereinrichtung 8. Das dargestellte zweite Adapterteil 10 ist insbesondere eine Aufsetzverschraubung 10. Das zweite Adapterteil 10 kann in einen ersten Endabschnitt 30, einen weiteren Endabschnitt 32 und einen Mittelabschnitt 31 unterteilt werden. Der erste Endabschnitt 30 kann in Form einer Sechskantmutter gebildet sein. Der weitere Endabschnitt 32 kann als Sechskantmutter gebildet sein. Für eine bessere Handhabung der Adaptereinrichtung 8 können unterschiedlich gebildete Sechskantmuttern vorgesehen sein, welche einen unterschiedlichen Außendurchmesser und/oder Länge aufweisen können. Die Sechskantmuttern können durch den Mittelabschnitt 31 beabstandet sein. Ferner weist das zweite Adapterteil 10 eine Anschlagsfläche 33 auf.

Figur 3d zeigt eine schematische Ansicht eines Ausführungsbeispiels eines elastischen Elements 34, insbesondere einer Dichtungseinrichtung 34 für die Adaptereinrichtung 8. Die Dichtungseinrichtung 34, kann insbesondere ein Dichtungsring 34 mit einem bestimmten Innen- und Außendurchmesser und einer bestimmten Breite und Höhe sein. Insbesondere kann der Dichtungsring 34 derart gebildet sein, dass der Innendurchmesser des Dichtungsrings 34 zum Außendurchmesser des Mittelabschnitts 26 des ersten Adapterteils 22 korrespondiert. Mit anderen Worten kann der Innendurchmesser des Dichtungsrings 34 im Wesentlichen dem Außendurchmesser des Mittelabschnitts 26 entsprechen. Darüber hinaus kann die Breite des Dichtungsrings 34 im Wesentlichen der Breite des Mittelabschnitts 26 entsprechen. Vorzugweise kann die Dichtungseinrichtung 34 aus Viton, d.h. aus einem für Dichtanwendungen speziell entwickelten Fluorelastomer, gebildet sein.

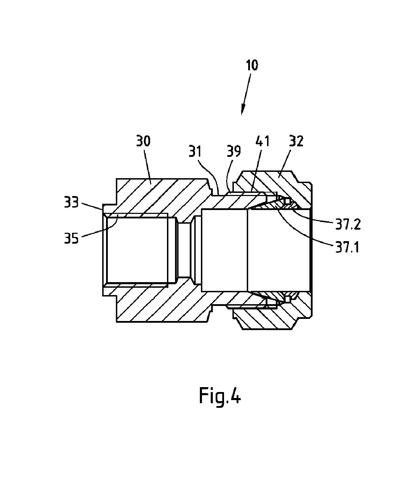

In Figur 4 ist eine schematische Schnittansicht eines Ausführungsbeispiels eines zweiten Adapterteils 10 dargestellt. Das vorliegende Adapterteil 10 ist eine Aufsetzverschraubung 10. Die dargestellte Aufsetzverschraubung 10 weist einen Mittelabschnitt 31 und zwei Endabschnitte 30 und 32 auf. Wie zu erkennen ist, kann der erste Endabschnitt 30 ein Innengewinde 35 aufweisen. Das Innengewinde 35 kann insbesondere zu dem Außengewinde 29 des ersten Adapterteils 22 der Adaptereinrichtung 8 korrespondieren. Ferner weist das zweite Adapterteil 10 eine Anschlagsfläche 33 auf.

Darüber hinaus ist der weitere Endabschnitt 32 an dem Mittelabschnitt 31 derart gelagert, dass der Endabschnitt 32 axial beweglich ist. Der Mittelabschnitt 31 weist ein Außengewinde 39 auf. Wie ferner aus der Figur 4 zu erkennen ist, weist der Endabschnitt 32 ein Innengewinde 41 auf. Das Innengewinde 41 korrespondiert zu dem Außengewinde 39 und ermöglicht eine axiale Bewegung des weiteren Endabschnitts 32.

Ferner sind vorliegend zwei Presselemente 37.1, 37.2 vorgesehen. Diese weisen einen im Wesentlichen keilförmigen Querschnitt auf und sind radial beweglich an dem weiteren Endabschnitt 32 gelagert. Die Presselemente 37.1, 37.2 stehen in Wirkverbindung mit dem Endabschnitt 32 und dem Mittelabschnitt 31. Vorzugsweise kann mindestens eines der Presselemente 37.1, 37.2 aus einem Dichtungsmaterial hergestellt sein. Eine ausreichende Dichtung kann durch die Presselemente 37.1, 37.2 erzielt werden. Eine separate Dichtungseinrichtung beispielsweise in Form eines Dichtungsrings ist nicht erforderlich.

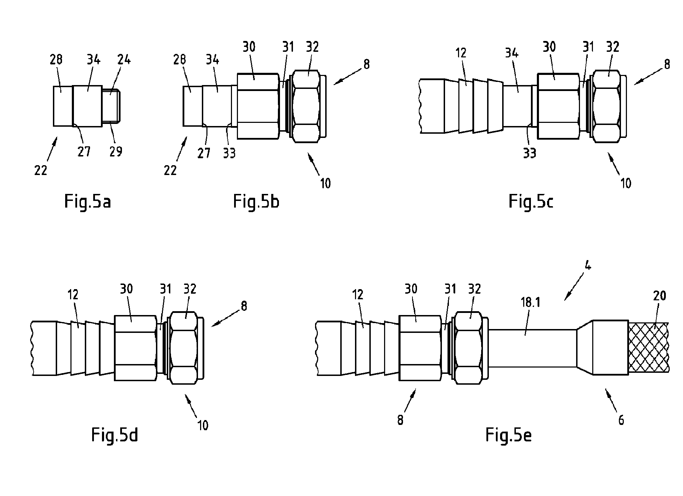

Die Funktionsweise der zuvor beschriebenen Elemente und insbesondere die Herstellung einer fluiddichten Verbindung werden nachfolgend mit Hilfe der Figuren 5a bis 5e detailliert erläutert. In den Figuren 5a bis 5e werden beispielhaft verschiedene Zustände der Verbindungsanordnung 4 während eines Verfahrens zum Verbinden der Verbindungsanordnung 4 mit einer Begleittemperierungsleitung 12 dargestellt.

In einem ersten Schritt des Verfahrens kann das erste Adapterteil 22, wie die Einsetzverschraubung 22, bereitgestellt werden. In einem nächsten Schritt kann ein elastisches Element 34, wie eine Dichtungseinrichtung 34, auf das erste Adapterteil 22 aufgebracht werden. Es versteht sich, dass alternativ ein erstes vorgefertigtes Adapterteil mit einem elastischen Element bereitgestellt werden kann.

Insbesondere kann ein Dichtungsring 34 über den Mittelabschnitt 26 des ersten Adapterteils 22 platziert werden, indem der Dichtungsring 34 über den Endabschnitt 24 aufgeschoben wird. Die Auskragung 27 dient insbesondere als Anschlag für den Dichtungsring 34 (Figur 5a).Wie zu erkennen ist, entspricht der Außendurchmesser des Dichtungsrings 34 im Wesentlichen dem Außendurchmesser der Auskragung 27 oder der Außendurchmesser des Dichtungsrings 34 ist größer.

In dem nächsten Schritt kann das zweite Adapterteil 10 der Adaptereinrichtung 8 mit dem ersten Adapterteil 22 der Adaptereinrichtung 22 verbunden werden (Figur 5b). Insbesondere kann das Innengewinde 35 des zweiten Adapterteils 10 mit dem Außengewinde 29 des ersten Adapterteils 22 vorverbunden und in eine Verbindungsanfangsposition gebracht werden. Unter einer Verbindungsanfangsposition ist zu verstehen, dass noch keine endgültige Verbindungsendposition erreicht wurde. Beispielsweise sind nur eine oder wenige Windungen der beiden Gewinde 29, 35 miteinander verbunden. So können die Adapterteile 22, 10 bis zur Hälfte der beiden Gewinde 29, 35 miteinander verschraubt werden. Insbesondere kann das erste Adapterteil 22 mit dem zweiten Adapterteil derart vorverbunden werden, dass der Dichtungsring 34 sowohl die Auskragung 27 als auch die Anschlagsfläche 33 kontaktiert, ohne dass eine Stauchung des Dichtungsrings 34 erfolgt.

In dem in Figur 5c gezeigten nächsten Schritt wird die in einem Vorverbindungszustand befindliche Adaptereinrichtung 8 in eine Begleittemperierungsleitung 12 eingesetzt. Insbesondere ist das Leitungsende der Begleittemperierungsleitung 12 in Form einer Schlauchtülle gebildet. In das Ende der Begleittemperierungsleitung 12 wird vorzugsweise das erste Adapterteil 22, insbesondere der weitere Endabschnitt 28 und der Mittelabschnitt 26 umfassend das elastische Element 34 eingesetzt. Der Außendurchmesser des elastischen Elements 34 kann im Wesentlichen dem Innendurchmesser der Begleittemperierungsleitung 12 entsprechen.

Vorzugsweise wird das erste Adapterteil 22 derart in die Begleittemperierungsleitung 12 eingesetzt, dass zumindest der Dichtungsring 34 zumindest nahezu vollständig bedeckt ist (Figur 5d). Anschließend kann eine endgültige Verbindungsendposition des ersten und zweiten Adapterteils 10, 22 durch eine Schraubbewegung hergestellt werden. Insbesondere kann die Sechskantmutter 30 angezogen werden. Durch die weitere axiale Bewegung des zweiten Adapterteils 10 wird der Abstand zwischen der Anschlagsfläche 33 und der Auskragung 27 weiter verringert. Das elastische Element 34 wird gestaucht. Es dehnt sich insbesondere in radialer Richtung aus. Mit anderen Worten wirkt das erste Adapterteil 22 umfassend die Dichtungseinrichtung 34 derart mit dem zweiten Adapterteil 10 zusammen, dass durch das (endgültige) Verschrauben die Dichtungseinrichtung 34 in der Begleittemperierungsleitung 12 gestaucht wird. Die Stauchung bewirkt einen Kraftschluss zwischen der Adaptereinrichtung 8 und der Begleittemperierungsleitung 12. Gleichzeitig wird eine ausreichende Dichtheit erzielt.

In einem nächsten in Figur 5e gezeigten Schritt kann der flexibel gebildete Metallverbindungsschlauch 6, insbesondere ein starrer Endabschnitt des Metallverbindungsschlauch 6, in die Adaptereinrichtung 8 eingesetzt werden. Der eingesetzte Metallverbindungsschlauch 6 kann mittels der Presselemente 37.1, 37.2 kraftschlüssig mit der Adaptereinrichtung 8 verbunden werden. Insbesondere wirken die vorliegend keilförmig gebildeten Presselemente 37 mit dem Endabschnitt 32 derart zusammen, dass durch Bewegen des Endabschnitts 32 axial in Richtung des ersten Endabschnitts 30 die Presselemente gegen die Begleittemperierungsleitung 12 radial inwärts gedrückt. Die axiale Bewegung kann mittels der Gewinde 39, 41 bewirkt werden. Durch die keilförmige Ausbildung der Presselemente 37.1, 37.2 und deren radial beweglich Lagerung im zweiten Adapterteil 10 kann die axiale Bewegung in eine radiale Bewegung umgeleitet werden. Insbesondere durch ein Anziehen der Sechskantmutter 32 wird eine Bewegung des weiteren Endabschnitts 32 in axialer Richtung bewirkt. Falls zumindest ein Presselement 37.1, 37.2 als Dichtungseinrichtung gebildet ist, kann gleichzeitig in einfacher Weise eine fluiddichte Verbindung bereitgestellt werden.

Die Verbindungsanordnung 4 kann in entsprechender Weise durch eine weitere Adaptereinrichtung 8 mit einer weiteren Begleittemperierungsleitung 12 verbunden werden. In einfacher und kostengünstiger Weise kann eine Verbindungsanordnung 4 zwischen zwei zu verbindenden Begleittemperierungsleitungen 12 angeordnet werden. Es versteht sich, dass gemäß anderen Varianten der Erfindung die fluiddichte Verbindung mit der weiteren Begleittemperierungsleitung 12 auch auf anderer Weise, beispielsweise mittels einer anderen Adaptereinrichtung, gebildet werden kann.

Es versteht sich ferner, dass die zuvor genannten Schritte auch in einer anderen Reihenfolge durchgeführt werden können. Beispielsweise kann in einem ersten Schritt das zweite Adapterteil 10 der Adaptereinrichtung 8 bereitgestellt werden. In einem nächsten Schritt kann dann zunächst der flexibel gebildete Metallverbindungsschlauch 6 in das zweite Adapterteil 10 eingesetzt werden. Insbesondere kann, wie zuvor ausgeführt wurde, ein Kraftschluss hergestellt werden. Anschließend kann gemäß den zuvor beschriebenen Schritten die Adaptereinrichtung 8 mit der Begleittemperierungsleitung 12 kraftschlüssig verbunden werden.

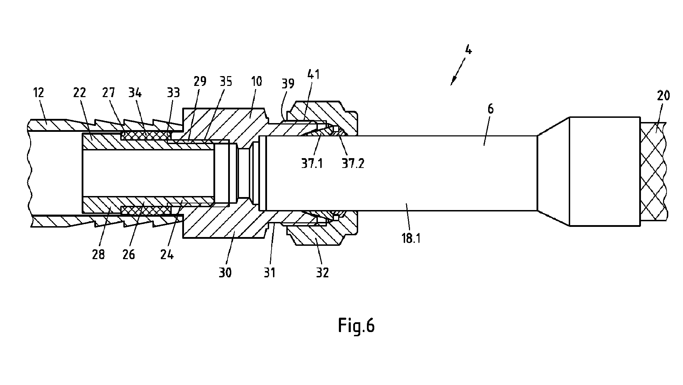

Die Figur 6 zeigt eine schematische Schnittansicht eines Ausführungsbeispiels eines Teilausschnittes eines Temperierungskreislaufsystems 2 gemäß der Erfindung. Insbesondere zeigt die Figur 6 eine Schnittansicht von einer Verbindungsanordnung 4, welche mit einer Begleittemperierungsleitung 12 kraftschlüssig verbunden ist.

Wie aus der Figur 6 zu erkennen ist, ist vorliegend die Dichtungseinrichtung 34 gestaucht. Mit anderen Worten ist die Dichtungseinrichtung 34 im Vergleich zu dem Normalzustand in der radialen Richtung gedehnt. Die Dichtungseinrichtung 34 wird in radialer Richtung nach Außen gegen die Begleittemperierungsleitung 12 gedrückt. Dies bewirkt eine kraftschlüssige Verbindung zwischen der Adaptereinrichtung 8 und der Begleittemperierungsleitung 12.

Des Weiteren ist zu erkennen, dass die Presselemente 37.1, 37.2 radial nach innen gedrückt werden. Insbesondere werden die Presselemente 37.1, 37.2 gegen die Umfangsfläche des Endabschnitts 18.1 des Metallverbindungsschlauchs 6 gedrückt. Dies bewirkt eine kraftschlüssige Verbindung zwischen dem Metallverbindungsschlauch 6 und der Adaptereinrichtung 8.

Erfindungsgemäß kann in einfacher Weise eine fluiddichte Verbindung zwischen zwei Begleittemperierungsleitung 12 durch die Anordnung einer erfindungsgemäßen Verbindungsanordnung 4 erzielt werden.

## Patentansprüche

1. Verbindungsanordnung (4) für ein Temperierungskreislaufsystem (2) mit einer ersten mit einer weiteren Begleittemperierungsleitung (12, 12.2) zu verbindenden Begleittemperierungsleitung (12, 12.1), wobei die Verbindungsanordnung (4) umfasst:
- mindestens einen zumindest teilweise flexibel gebildeten Metallverbindungsschlauch (6), und
- mindestens eine Adaptereinrichtung (8, 8.1, 8.2),
- wobei die Adaptereinrichtung (8, 8.1, 8.2) zum fluiddichten Verbinden der Adaptereinrichtung (8, 8.1, 8.2) mit der Begleittemperierungsleitung (12, 12.1, 12.2) eingerichtet ist, und
- wobei die Adaptereinrichtung (8, 8.1, 8.2) zum fluiddichten Verbinden der Adaptereinrichtung (8, 8.1, 8.2) mit dem Metallverbindungsschlauch (6) eingerichtet ist.

2. Verbindungsanordnung (4) nach Anspruch 1, **dadurch gekennzeichnet, dass**
- mindestens eine weitere Adaptereinrichtung (8, 8.1, 8.2) eingerichtet zum fluiddichten Verbinden der weiteren Adaptereinrichtung (8, 8.1, 8.2) mit der weiteren Begleittemperierungsleitung (12, 12.1, 12.2) und zum fluiddichten Verbinden der weiteren Adaptereinrichtung (8, 8.1, 8.2) mit dem Metallverbindungsschlauchs (6) vorgesehen ist,
- wobei insbesondere die Adaptereinrichtung (8, 8.1, 8.2) und die weitere Adaptereinrichtung (8, 8.1, 8.2) im Wesentlichen identisch gebildet sind.

3. Verbindungsanordnung (4) nach Anspruch 1 oder 2, **dadurch gekennzeichnet, dass** der Metallverbindungsschlauch (6) ein Metallwellschlauch (6), insbesondere ein Edelstahlwellschlauch (6), ist.

4. Verbindungsanordnung (4) nach einem der vorherigen Ansprüche, **dadurch gekennzeichnet,**
- **dass** die Adaptereinrichtung (8, 8.1, 8.2) zum kraftschlüssigen Verbinden der Adaptereinrichtung (8, 8.1, 8.2) mit der Begleittemperierungsleitung (12, 12.1, 12.2) eingerichtet ist,
und/oder
- **dass** die Adaptereinrichtung (8, 8.1, 8.2) zum kraftschlüssigen Verbinden der Adaptereinrichtung (8, 8.1, 8.2) mit dem Metallverbindungsschlauch (6) eingerichtet ist.

5. Verbindungsanordnung (4) nach einem der vorherigen Ansprüche, **dadurch gekennzeichnet, dass**
- die Adaptereinrichtung (8, 8.1, 8.2) ein erstes Adapterteil (22) umfasst,
- wobei das erste Adapterteil (22) einen ersten Endabschnitt (24), einen weiteren Endabschnitt (28) und einen Mittelabschnitt (26) aufweist,
- die Adaptereinrichtung (8, 8.1, 8.2) ein zweites Adapterteil (10) umfasst,
- wobei das zweite Adapterteil (10) einen ersten Endabschnitt (30), einen weiteren Endabschnitt (32) und einen Mittelabschnitt (31) aufweist,
- wobei der erste Endabschnitt (24) des ersten Adapterteils (22) mit dem ersten Endabschnitt (30) des zweiten Adapterteils (10) verbindbar ist.

6. Verbindungsanordnung (4) nach Anspruch 5, **dadurch gekennzeichnet, dass**
- das erste Adapterteil (22) ein elastisches Element (34) umfasst, und
- das erste Adapterteil (22) und das zweite Adapterteil (10) derart eingerichtet sind, dass in einer Verbindungsendposition des ersten Adapterteils (22) und des zweiten Adapterteils (10) das elastische Element (34) gestaucht ist.

7. Verbindungsanordnung (4) nach Anspruch 6, **dadurch gekennzeichnet, dass**
- der weitere Endabschnitt (28) des ersten Adapterteils (22) eine Auskragung (27) aufweist,
- der an die Auskragung (27) anschließende Mittelabschnitt (26) des ersten Adapterteils (22) das elastische Element (34) umfasst, insbesondere von dem elastischen Element (34) umgeben ist
- der erste mit dem ersten Endabschnitt (24) des ersten Adapterteils (22) verbindbare Endabschnitt (30) des zweiten Adapterteils (10) eine Anschlagsfläche (33) aufweist, und
- in der Verbindungsendposition des ersten Adapterteils (22) und des zweiten Adapterteils (10) das elastische Element (34) zwischen der Auskragung (27) und der Anschlagsfläche (33) gestaucht ist.

8. Verbindungsanordnung (4) nach einem der Ansprüche 5 bis 7, dass der erste Endabschnitt (24) des ersten Adapterteils (22) ein zu einem Gewinde (35) des ersten Endabschnitts (30) des zweiten Adapterteils (10) korrespondierendes Gewinde (29) aufweist.

9. Verbindungsanordnung (4) nach einem der Ansprüche 6 bis 8, **dadurch gekennzeichnet, dass** das elastische Element (34) eine Dichtungselement (34), insbesondere ein Dichtungsring (34) aus Viton, ist.

10. Verbindungsanordnung (4) nach einem der Ansprüche 5 bis 9 **dadurch gekennzeichnet, dass** der weitere Endabschnitt (32) des zweiten Adapterteils (10) mindestens ein zumindest in radialer Richtung beweglich gelagertes Presselement (37.1, 37.2) aufweist.

11. Verbindungsanordnung (4) nach Anspruch 10, **dadurch gekennzeichnet, dass**
- der weitere Endabschnitt (32) des zweiten Adapterteils (10) an dem Mittelabschnitt (31) des zweiten Adapterteils (10) in axialer Richtung beweglich gelagert ist, und
- der weitere Endabschnitt (32) des zweiten Adapterteils (10) mit dem Presselement (37.1, 37.2) derart in Wirkverbindung steht, dass eine Bewegung des zweiten Endabschnitts (32) in axialer Richtung eine radiale Bewegung des Presselements (37.1, 37.2) bewirkt.

12. Verbindungsanordnung (4) nach einem der vorherigen Ansprüche 5 bis 11, **dadurch gekennzeichnet, dass** der Mittelabschnitt (31) des zweiten Adapterteils (10) ein zu einem weiteren Gewinde (41) des weiteren Endabschnitts (32) des zweiten Adapterteils (10) korrespondierendes Gewinde (39) aufweist.

13. Temperierungskreislaufsystem (2), umfassend:
- mindestens eine zu temperierende Fluidleitung (17),
- eine erste Begleittemperierungsleitung (12, 12.1) eingerichtet zur Temperierung der Fluidleitung (17),
- eine weitere Begleittemperierungsleitung (12, 12.2) eingerichtet zur Temperierung der Fluidleitung (17), und
- eine Verbindungsanordnung (4) nach einem der vorherigen Ansprüche zum Verbinden der ersten Begleittemperierungsleitung (12, 12.1) mit der weiteren Begleittemperierungsleitung (12, 12.2).

14. Verfahren zum Verbinden einer Begleittemperierungsleitung (12, 12.1, 12.2) eines Temperierungskreislaufsystems (2) mit einer Verbindungsanordnung (4), insbesondere einer Verbindungsanordnung (4) nach einem der Ansprüche 1 bis 12, umfassend:
- Bereitstellen von mindestens einer Adaptereinrichtung (8, 8.1, 8.2),
- Bereitstellen von mindestens einem zumindest teilweise flexibel gebildeten Metallverbindungsschlauch (6),
- Herstellen einer fluiddichten Verbindung zwischen der Adaptereinrichtung (8, 8.1, 8.2) und der Begleittemperierungsleitung (12, 12.1, 12.1), und
- Herstellen einer fluiddichten Verbindung zwischen der Adaptereinrichtung (8, 8.1, 8.2) und dem Metallverbindungsschlauch (6).

15. Verfahren nach Anspruch 15, **dadurch gekennzeichnet, dass**
- ein erstes Adapterteil (22) der Adaptereinrichtung (8, 8.1, 8.2) und ein zweites Adapterteil (10) der Adaptereinrichtung (8, 8.1, 8.2) miteinander derart verschraubt werden, dass in einer Verbindungsendposition eine kraftschlüssige Verbindung zwischen der Adaptereinrichtung (8, 8.1, 8.2) und der Begleittemperierungsleitung (12, 12.1, 12.2) und/oder dem Metallverbindungsschlauch (6) hergestellt wird, und/oder
- ein weiterer Endabschnitt (32) des zweiten Adapterteils (10) und ein Mittelabschnitt (31) des zweiten Adapterteils (10) derart miteinander verschraubt werden, dass in einer Verbindungsendposition eine kraftschlüssige Verbindung zwischen der Adaptereinrichtung (8, 8.1, 8.2) und der Begleittemperierungsleitung (12, 12.1, 12.2) und/oder dem Metallverbindungsschlauch (6) hergestellt wird.
